# EUROPEAN PATENT SPECIFICATION

(11) **EP 3 152 021 B1**
(45) Date of publication and mention of the grant of the patent: **01.05.2024**
(21) Application number: 15726610.7
(22) Date of filing: 03.06.2015
(51) Int. Cl.: B28B 3/20, C04B 35/111, C04B 35/46, C04B 35/462, C04B 35/626, C04B 35/632, C04B 35/634, C04B 35/636

(54) **CERAMIC COMPOSITIONS**
KERAMIKZUSAMMENSETZUNGEN
COMPOSITIONS DE CÉRAMIQUE

(30) Priority: 04.06.2014 EP 14290162
(43) Date of publication of application: 12.04.2017
(73) Proprietor: IMERTECH SAS, 75015 Paris (FR)
(72) Inventor: ZHANG, Wen, 78100 Saint-Germain en Laye (FR); GASGNIER, Gilles, F-87170 Isle (FR); MICALETTI, Paul, F-87410 Le Palais-sur-Vienne (FR); ETCHEGOYEN, Grégory, F-87240 Ambazac (FR); CHASTAGNIER, Bénédicte, F-87260 Saint Paul (FR)
(74) Representative: Haseltine Lake Kempner LLP
(86) International application number: PCT/EP2015/062420
(87) International publication number: WO 2015/185651

(56) References cited:
- EP-A2- 0 246 438
- WO-A1-00/43326
- WO-A1-03/070662
- WO-A2-2008/066800
- WO-A2-2009/134398
- US-A1- 2001 003 576
- US-A1- 2008 300 153
- US-A1- 2014 080 039

## Description

### TECHNICAL FIELD

The present invention is directed to a dried or at least partially dried ceramic feedstock and to a method of preparing a dried or at least partially dried ceramic feedstock having a residual solvent content of from 0.1 to 7.5 wt.%. Also disclosed herein are ceramic formulations comprising one or more ceramic precursors, temperature sensitive gelling agent, solvent, and having a viscosity suitable for low pressure injection molding, to a method for preparing said ceramic formulations, to a method of forming a ceramic article from said ceramic formulations, and to a ceramic article obtainable therefrom, which are not encompassed by the wording of the claims but are considered useful for understanding the invention.

### BACKGROUND OF THE INVENTION

Low pressure Injection molding (LPIM) is used for forming of net shape ceramic components. Besides the capability of forming near net complex shapes, the LPIM technique has caught the attention of researchers for its relative simplicity and the advantages it offers over other ceramic manufacturing techniques.

Document WO 2008/066800 A2 discloses a ceramic powder batch mixture comprising 70-85% inorganic powders, 15-25% water and 1-5% of a plasticizing binder, such as cellulose ethers.

Injection molding is a direct consolidation process where there is no liquid removal during forming. In other words, the green density of the ceramic bodies is roughly equivalent to the volume solid loading of the used slurries. Consequently, one of the challenges in this process is to prepare highly concentrated slurries. Another challenge is the preparation of feedstocks for preparing the highly concentrated slurries and the provision of such feedstocks in a convenient form which is user-friendly for ceramic manufacturers.

### BRIEF DESCRIPTION OF THE DRAWINGS

Figure 1(a) is a flow chart summarizing one illustrative embodiment of the present invention.
Figure 1(b) is a flow chart summarising another illustrative embodiment of the present invention.
Figure 2 is a graph depicting the evolution of the viscosity of an agar solution (water) at 1.0 wt. %.
Figure 3 is a graph depicting the evolution of gel strength of a 1.0 wt. % agarose gel during the heating cycle.
Figure 4 compares the gel strength of an agarose gel and an agarose/fructose gel.
Figures 5 and 6 depict the breaking strength and creeping (deformation) of just-gelled bodies according to exemplary embodiments.
Figure 7 is a schematic depiction of apparatus used to determine gel strength.
Figure 8 is a schematic depiction of the indenter used in the determination of the breaking strength of a gelled body.

### SUMMARY OF THE INVENTION

According to a first aspect of the invention, there is provided a ceramic feedstock comprising one or more ceramic precursors and temperature sensitive gelling agent, wherein the ceramic feedstock is dried or at least partially dried and has a solvent content from 0.1 to 7.5 wt.%, based on the total weight of the ceramic feedstock, wherein the temperature sensitive gelling agent is selected from one or more of a polysaccharide, gelatin, a polyoside, a poloxamer and mixtures thereof.

According to a second aspect of the invention, there is provided a method of preparing a dried or at least partially dried ceramic feedstock having a residual solvent content from 0.1 to 7.5 wt.%, said method comprising:
preparing or providing a ceramic slurry comprising one or more ceramic precursors, temperature sensitive gelling agent, solvent and optional dispersant and/or reinforcing additive and/or binder other than the gelling agent, wherein the temperature sensitive gelling agent is selected from one or more of a polysaccharide, gelatin, a polyoside, a poloxamer and mixtures thereof; wherein the solvent is a polar solvent; and
treating the ceramic slurry under suitable conditions to obtain a dried or at least partially dried ceramic feedstock having a residual solvent content from 0.1 to 7.5 wt.%, based on the total weight of the ceramic feedstock.

Also disclosed herein as a first disclosure is a ceramic formulation comprising one or more ceramic precursors, temperature sensitive gelling agent, solvent, and having a solids concentration of at least 50 vol.%, further characterized in that the ceramic formulation has a viscosity suitable for low pressure injection molding, for example, a viscosity of not more than 10 Pa.s at a shear rate of 100 s⁻¹ at a temperature greater than the gel point of the gelling agent.

Also disclosed herein as a second disclosure is a method of making a ceramic formulation in accordance with the first disclosure, comprising: providing at least one pre-dispersed ceramic precursor; providing a solution or suspension comprising a solvent and at least one pre-dispersed gelling agent, optionally with reinforcing additive and binder other than the gelling agent; admixing the at least one pre-dispersed ceramic precursor and the solution or suspension to form the ceramic formulation.

Also disclosed herein as a third disclosure is a ceramic feedstock comprising one or more ceramic precursors and temperature sensitive gelling agent, wherein the ceramic feedstock is dried or at least partially dried and has a solvent content of up to about 15 wt. %, based on the total weight of the ceramic feedstock

Also disclosed herein as a fourth disclosure is a method of preparing a dried or at least partially dried ceramic feedstock having a residual solvent content of up to about 15 wt. %, said method comprising: preparing, obtaining or providing a ceramic slurry comprising one or more ceramic precursors, temperature sensitive gelling agent, solvent and optional dispersant and/or reinforcing additive and/or binder other than the gelling agent; and treating the ceramic slurry under suitable conditions to obtain a dried or at least partially dried ceramic feedstock having a residual solvent content of up to about 15 wt. %, based on the total weight of the ceramic feedstock.

Also disclosed herein as a fifth disclosure is a ceramic formulation comprising one or more ceramic precursors, temperature sensitive gelling agent, solvent, and having a viscosity suitable for low pressure injection molding, for example, a viscosity of from about 0.1 to 10.0 Pa.s at a shear rate of 100 s⁻¹.

Also disclosed herein as a sixth disclosure is a method for preparing a ceramic formulation, said method comprising: preparing, obtaining or providing a ceramic slurry comprising one or more ceramic precursors, temperature sensitive gelling agent, solvent and optional dispersant and/or reinforcing additive and/or binder other than the gelling agent; treating the ceramic slurry under suitable conditions to obtain a dried or at least partially dried ceramic feedstock; and mixing the dried or at least partially dried ceramic feedstock with a suitable amount of additional solvent at a temperature above the gel point of the gelling agent to obtain a ceramic formulation having a viscosity suitable for low pressure injection molding.

Also disclosed herein as a seventh disclosure is a method of forming a ceramic article, said method comprising: forming a green gelled ceramic body from a ceramic formulation comprising one or more ceramic precursors, temperature sensitive gelling agent, solvent and having a solids concentration of at least 50 vol.%, optionally drying the green gelled ceramic body; and firing the green gelled ceramic body to form a sintered ceramic article.

Also disclosed herein as an eighth disclosure is a ceramic article obtainable by the method according to the seventh disclosure.

### DETAILED DESCRIPTION OF THE INVENTION

The term "ceramic feedstock" as used herein means a composition comprising one or more ceramic precursors, which is suitable for packaging and transportation and, moreover, upon mixing with a suitable amount of solvent, such as water, forms a ceramic formulation suitable for low pressure injection molding.

The ceramic feedstock is dried or at least partially dried and has a solvent (e.g., moisture content) of from about 0.1 to about 7.5 wt. %, or from about 0.1 to about 5.0 wt. %, or from about 0.1 to about 4.0 wt. %, or from about 0.1 to about 3.0 wt. %, or from about 0.1 to about 2.0 wt. %, or from about 0.1 to about 1.0 wt. %, or from about 0.2 to about 5.0 wt. %, or from about 0.3 to about 3.0 wt. %, or from about 0.4 to about 2.0 wt. %, or from about 0.2 to about 1.0 wt. %, or from about 0.3 to about 0.8 wt. %, or from about 0.4 to about 0.6 wt. %.

A dried feedstock may be characterized as having a solvent (e.g., moisture content) of less than about 0.1 wt. %, based on the total weight of the ceramic feedstock.

Solvent content (e.g., moisture content) may be determined by the difference in weight between the feedstock precursor, i.e., the ceramic slurry described herein, prior to treatment to obtain the ceramic feedstock in the dried/partially dried state. The solvent content of the feedstock may be referred to as "residual solvent" since it is the amount of solvent remaining following treatment of feedstock precursor, i.e., the ceramic slurry described herein, to obtain the dried or at least partially dried ceramic feedstock.

The solvent may be of any form suitable to enable the gelling agent to gel following cooling to or below the gel point of the gelling agent. Advantageously, the solvent functions to dissolve the gelling agent (i.e., at a temperature above the melting point of the gelling agent) during preparation of the ceramic feedstock and serves as a carrier for the ceramic mixture during molding. In certain embodiments, the solvent is a polar solvent, .e.g., an aqueous solution such as water, or alcohol. In certain embodiments, the solvent is water.

The ceramic feedstock comprises one or more ceramic precursors. The one or more ceramic precursors will typically be in particulate form, for example, having a d₅₀ of from about 0.1 µm to about 500 µm, for example, from about 0.1 µm to about 250 µm, or from about 0.1 µm to about 100 µm, or from about 0.1 µm to about 50 µm, or from about 0.1 µm to about 25 µm. Unless otherwise stated, the mean (average) equivalent particle diameter (d₅₀ value) referred to herein is as measured in a well known manner by laser light scattering of the particulate material in a fully dispersed condition in an aqueous medium using a LA950 machine as supplied by Horiba, referred to herein as a "Horiba LA950 unit". Such a machine provides measurements and a plot of the cumulative percentage by volume of particles having a size, referred to in the art as the 'equivalent spherical diameter' (esd), less than given esd values. The mean particle size d₅₀ is the value determined in this way of the particle esd at which there are 50% by volume of the particles which have an equivalent spherical diameter less than that d₅₀ value. Likewise, d₉₀ is the value determined in this way of the particle esd at which there are 90% by volume of the particles which have an equivalent spherical diameter less than that d₉₀ value. Likewise, d₁₀ is the value determined in this way of the particle esd at which there are 10 % by volume of the particles which have an equivalent spherical diameter less than that d₁₀ value.

In certain embodiments, the one or more ceramic precursors are suitable for manufacturing ceramics selected from tableware, sanitary ware, kiln furniture, refractory materials and technical grade ceramics.

In certain embodiments, the one or more ceramic precursors are suitable for manufacturing tableware, including utensils, vessels, and the like, designed for the retention or serving of foods. The one or more ceramic precursors may be suitable for manufacturing porcelain tableware.

In certain embodiments, the one or more ceramic precursors are suitable for manufacturing sanitary ware, including toilets, basins, and the like, as well as other items of bathroom furniture, such as baths and shower trays and columns. The one or more ceramic precursors may be suitable for manufacturing stoneware or vitreous sanitary ware.

In certain embodiments, the one or more ceramic precursors are suitable for manufacturing kiln furniture. Kiln furniture includes shelves and posts and the like used to support ware inside the kiln.

In certain embodiments, the one or more ceramic precursors are suitable for manufacturing refractory materials. Refractory materials include refractory linings such as lining for cupolas hearth and siphon, blast furnaces, main, secondary and tilting runners, vessels or vessel spouts, ladles, tundishes, reaction chambers and troughs that contain, direct the flow or are suitable to facilitate the industrial treatment of liquid metals and slags, or any other high temperature liquids, solids or gases. Refractory materials also include refractory articles, such as those described above, and pre-shaped articles, in whole or part, such as refractory bricks and crucibles.

In certain embodiments, the one or more ceramic precursors are suitable for manufacturing technical grade ceramics. Technical grade ceramics include articles made from ceramic precursors such as, for example, quartz, silicon metal, alumina porcelain, steatite, cordierite, mullite, alumina, zirconia, ferrites, garnets, titanates, carbides such as silicon carbide, boron carbide, tungsten carbide and titanium carbide, boron nitride, and silicides, and mixtures thereof. Technical grade ceramics include articles such as high heat resistant tiles, such as those used in spacecraft, gas burner nozzles, crucibles, molds and cores for foundry, molten metal filters, structured heat exchangers, like honeycombs or random packing, welding rings and supports, ballistic protection, e.g., body armour inserts, biomedical implants, coatings of jet engine turbine and components thereof, such as blades, ceramic disk brakes, missile nose cones, bearings, and the like. Other technical grade ceramics includes parts used for electrical applications, such as plugs, sockets, insulators, resistance supports, spark-plugs, ingitors, fuses, and the like. Other technical grade ceramics include parts used for filtration or catalyst applications, such as molecular sieves, fluid and gas filters, catalyst bed supports, and the like. Other technical grated ceramics include component parts of glass screens, windows, rods, tubs, semi-conductors, optical lenses and fibres.

In certain embodiments, the one or more ceramic precursors are selected from alumina, aluminosilicate, nepheline syenite, feldspar, talc, mica, quartz, silica, titania, zirconia, zirconia silicate, wollastonite, perlite, diatomaceous earth, an alkaline earth metal carbonate or sulphate, such as calcium carbonate, magnesium carbonate, dolomite, and gypsum, a carbide such as silicon carbide, boron carbide, tungsten carbide and titanium carbide, boron nitride, a silicide such as nickel silicide, sodium silicide, magnesium silicide, platinum silicide, titanium silicide, tungsten silicide, silicon metal, ceria, yttrium oxide, ferrite such as zinc-iron ferrite, barium-strontium ferrite, strontium ferrite, garnet such as yttrium-aluminium garnet, titanate such as barium titanate, lead titanate, graphite, other carbon based ceramic precursor materials, and combinations thereof.

The aluminosilicate may be one or more of andalusite, kyanite, sillimanite, mullite, molochite, a hydrous kandite clay such as kaolin, illite, halloysite or ball clay, or an anhydrous (calcined) kandite clay such as metakaolin or fully calcined kaolin.

The alumina may be selected from one or more of fused alumina (e.g., corundum), sintered alumina, calcined alumina, reactive or semi-reactive alumina, bauxite, and chamotte having an alumina content.

The ceramic feedstock may comprise up to about 99.9 wt. % of the one or ceramic precursors, based on the total weight of the ceramic feedstock, for example, from about 70 wt. % to about 99.5 wt. %, from about 70 wt. % to about 99.0 wt. %, or from about 70 wt. % to about 98.5 wt. %, or from about 70 wt. % to about 98.0 wt. %, or from about 70 wt. % to about 97.5 wt. %, or at least about 75 wt. %, or at least about 80 wt. %, or at least about 85 wt. %, or at least about 90 wt. %, or at least about 91 wt. %, or at least about 92 wt. %, or at least about 93 wt. %, or at least about 94 wt. %, or at least about 95 wt. %, or at least about 96 wt. %, or at least about 97 wt. %, or at least about 98 wt. %, or at least about 98.5 wt. %, or at least about 99.0 wt. %, or at least about 99.1 wt. %, or at least about 99.2 wt. %, or at least about 99.3 wt. %, or at least about 99.5 wt. %. The balance of the ceramic feedstock comprises temperature sensitive gelling agent, and optionally residual solvent, dispersant, reinforcing additive, binder (other than the gelling agent), biocide, auxiliant (e.g., lubricant) and/or antifoamer, as described herein. In certain embodiments, the total weight of components other than the one or more ceramic precursors is no greater than about 5 wt. %, based on the total weight of the ceramic feedstock, for example, from about 0. 5 wt. % to about 5 wt. %, or from about 1.0 wt. % to about 4.5 wt. %, or from about 1.5 wt. % to about 4.0 wt. %, or from about 2.0 wt. % to about 3.5 wt. %, or no greater than about 3.0 wt. %, or no greater than about 2.5 wt. %.

The ceramic feedstock comprises a temperature sensitive gelling agent. By "temperature sensitive" is meant that, in the presence of a suitable solvent, such as water, the gelling agent reversibly gels during a heating-cooling-heating-cooling cycle, i.e., upon heating the gelling agent in the solvent, e.g., water, to dissolve the gelling agent followed cooling to or below its gelling point. In certain embodiments, the gelling agent is a material which exhibits a gel strength, measured at room temperature (between about 18 and 25°C) on a gelled body formed from a gel consisting of about 1.0 wt. % gelling agent with the balance water, of at least about 25 kPa, for example, at least about 35 kPa, or at least about 45 kPa.

In certain embodiments, the gelling agent has first cycle gel strength of at least about 45 kPa. "First cycle gel strength", measured in accordance with the method described herein, refers to the gel strength of the gel following an initial heating cycle to dissolve the gelling agent in the water, (e.g., above about 90°C) followed by cooling to or below the gel point of the gelling agent. 'Second cycle gel strength' is the gel strength of the gel following a second heating step to break the gel to a lower viscosity liquid and a second cooling step to or below the gel point of the gelling agent. 'Third cycle gel strength' is the gel strength following a subsequent heating and cooling cycle. In certain embodiments, the gelling agent has a second cycle gel strength which is at least 70 % of the first cycle gel strength, and optionally a third cycle gel strength which is at least about 50 % of the first cycle gel strength. In certain embodiments, the gelling agent has a second and/or third cycle gel strength which is at least 90 % of the first cycle gel strength, or at least about 95 % of the first cycle gel strength, or within about 1 or 2 % of the first cycle gel strength, or comparable to the first cycle gel strength.

In certain embodiments, the temperature sensitive (TS) gelling agent is selected from one or more of a polysaccharide, gelatin, a polyoside, a poloxamer and mixtures thereof. In certain embodiments, the TS gelling agent is a polysaccharide or a mixture of polysaccharides, for example, one or more of a polysaccharide selected from agar, agarose, carrageenan, glactomannan (locust bean gum) and arabic gum. In certain embodiments, the polysaccharide is selected from one or more of agar, agarose and arabic gum.

In certain embodiments, the polysaccharide comprises D-galactose and L-galactose units, for example, alternating D-galactose and L-galactose, linked by glycosidic bonds. In certain embodiments, the L-galactose unit is a L-galactopyranose unit, for example, a 3,6-anhydro-L-galactopyranose unit, and optionally the polysaccharide comprises alternating D-galactose and L-galactopyranose units, e.g., alternating D-galactos and 3,6-anhydro-L-galactopyranose units, linked by glycosidic bonds.

Advantageously, the TS gelling agent is agar or agarose, preferably agarose. Agarose is one of the two principal components of agar and is purified from agar by removing agar's other component, agaropectin.

In certain embodiments, the TS gelling agent has a gel point of less than about 70 °C, for example, less than about 60 °C, or less than about 55 °C, or less than about 50°C, or less than about 45 °C, or about 40°or less. In certain embodiments, the TS gelling agent has a gel point above room temperature, for example, a gel point of at least about 25 °C, or at least about 30 °C, or at least about 35 °C. Gel point may be determined by observing the increase in viscosity of a 1.0 wt. % solution of gelling agent in water as it is cooled from a temperature at which the gelling agent dissolves in the water. The temperature at which there is a marked and rapid increase in viscosity is indicative of the gel point. The gel point may be determined in accordance with any suitable method which enables the skilled person to reliably determine and monitor the viscosity of the composition comprising the gelling agent as function of temperature.

For example, upon cooling a 1.0 wt. % solution of agarose in water, agarose is seen to have a gel point of about 36 °C.

The ceramic feedstock may further comprise dispersant. As described herein, the dispersant may be added during preparation of the feedstock precursor, i.e., the ceramic slurry. The dispersant is suitable for dispersing the one or more ceramic precursors. Suitable dispersants are well known to those skilled in the art. A dispersant is a chemical additive capable, when present in a sufficient amount, of acting on the particles of the one or more ceramic precursors to prevent or effectively restrict flocculation or agglomeration of the particles to a desired extent, according to normal processing requirements. The dispersant may be a mixture of different dispersants. Suitable dispersant comprise one or more dispersants selected from the group consisting of sulfonated naphthalene formaldehyde condensate (SNFC), polyelectrolytes such as polycarboxylic acids, polyacrylates and copolymers containing polyacrylate species, especially polyacrylate salts (e.g., sodium and aluminium optionally with a group II metal salt), polyphosphonates, sodium hexametaphosphates, non-ionic polyol, polyphosphoric acid, condensed sodium phosphate, non-ionic surfactants, alkanolamines and other reagents commonly used for this function. The dispersant may, for example, be selected from conventional dispersant materials commonly used in the processing and grinding of inorganic particulate materials. Such dispersants will be well recognised by those skilled in this art. They are generally water-soluble salts capable of supplying anionic species which in their effective amounts can adsorb on the surface of the inorganic particles and thereby inhibit aggregation of the particles. The unsolvated salts suitably include alkali metal cations such as sodium. Solvation may in some cases be assisted by making the aqueous suspension slightly alkaline. Examples of suitable dispersants include: water soluble condensed phosphates, e.g., polymetaphosphate salts [general form of the sodium salts: (NaPO₃)ₓ] such as tetrasodium metaphosphate or so-called "sodium hexametaphosphate" (Graham's salt); water-soluble salts of polysilicic acids; polyelectrolytes; salts of homopolymers or copolymers of acrylic acid or methacrylic acid, or salts of polymers of other derivatives of acrylic acid, suitably having a weight average molecular mass of less than about 20,000. The dispersant may be present in an amount up to about 5 wt. %, for example, up to about 2 wt. %, for example, from about 0.05 to about 2 wt. %, or from about 0.05 to 1.5 wt. %, or from about 0.05 to about 1.0 wt. %, or from about 0.05 to about 0.75 wt. %, or from about 0.05 to about 0.5 wt. %, or from about 0.05 to about 0.25 wt. %, or from about 0.05 to about 0.15 wt. %, based on the total weight of the ceramic feedstock.

In certain embodiments, the dispersant comprises or is an anionic polyelectrolyte or a mixture of anionic polyelectrolytes. In certain embodiments, the dispersant is a polyelectrolyte such as polyacrylates and copolymers containing polyacrylate species, especially polyacrylate salts (e.g., sodium and aluminium optionally with a group II metal salt). In certain embodiments, the dispersant is a polyacrylate, for example, sodium polyacrylate.

Advantageously, the gel strength of the gel and, thus, the mechanical strength of ceramic bodies formed from the ceramic feedstock and ceramic formulations described herein (e.g., molded green ceramic bodies that have been cooled to or below the gel point of the gelling agent), may be enhanced by incorporation of a reinforcing additive. Thus, in certain embodiments, the ceramic feedstock (and, thus, the ceramic formulation and green ceramic bodies formed therefrom) further comprises a reinforcing additive. Advantageously, the reinforcing additive improves second and third cycle gel strength (i.e., in the presence of the reinforcing additive the second and/or third cycle gel strength is greater than it otherwise would have been in the absence of the reinforcing additive. For example, in the presence of a reinforcing additive, the second and third cycle gel strength may be substantially the same as, e.g., comparable to, the first cycle gel strength.

In certain embodiments, the reinforcing additive is selected from one or more of monosaccharide, polysaccharide other than the TS gelling agent, disaccharide, glycerol, inulin syrup, and alkali or alkali earth metal borate (e.g., sodium borate, magnesium borate, calcium borate, and the like). In certain embodiments, the reinforcing additive is a polysaccharide other than the TS gelling agent, for example, glactomannan (locust bean gum).

In certain embodiments, the reinforcing additive is a monosaccharide and/or a disaccharide. The monosaccharide may be a diose, triose, tetrose, pentose, hexose or heptose. In certain embodiments, the monosaccharide is a hexose, for example, one or more of allose, altrose, glucose mannose, gulose, idose, galactose, talose, psicose, fructose, sorbose and tagatose. In certain embodiments, the reinforcing agent is fructose. Suitable disaccharides include sucrose, lactulose, lactose, maltose, trehalose and cellobiose.

The reinforcing additive (e.g., monosaccharide such as fructose) may be present in an amount up to about 5 wt. %, for example, up to about 2 wt. %, for example, from about 0.1 to about 2 wt. %, or from about 0.1 to 1.5 wt. %, or from about 0.1 to about 1.25 wt. %, or from about 0.5 to about 1.25 wt. %, or from about 0.75 to about 1.25 wt. %, based on the total weight of the ceramic feedstock.

In certain embodiments, the TS gelling agent is agarose and the reinforcing additive is fructose. In such embodiments, the ceramic feedstock may comprise up to about 5 wt. % of agarose and fructose combined, based on the total weight of the ceramic feedstock, for example, from about 0.1 wt. % to about 5 wt.%, or from about 0.5 wt. % to about 4 wt.%, or up to about 3 wt. %, or up to about 2 wt. %. In such embodiments, the ceramic feedstock may comprise up to about 1 wt. % dispersant, e.g., polyacrylate such as sodium polyacrylate, for example, from about 0.05 to about 0.5 wt. %, or from about 0.05 to about 0.25 wt. %, or from about 0.05 to about 0.15 wt. % dispersant, based on the total weight of the ceramic feedstock.

In certain embodiments, the gelling agent serves as binder for the ceramic body to be formed from the ceramic feedstock. In certain embodiments, the ceramic feedstock comprises binder other than the gelling agent.

In certain embodiments, the ceramic feedstock comprises one or more binders selected from the group consisting of, methyl cellulose (MC), hydroxymethylpropyl cellulose (HEMC), carboxy methyl cellulose (CMC, polyvinyl butyrals, emulsified acrylates, polyvinyl alcohols (PVOH), polyvinyl pyrrolidones, polyacrylics, starch, silicon binders, polyacrylates, silicates, polyethylene imine, lignosulfonates, and alginates. The binders can be present in a total amount between about 0.1 wt. % and about 10 wt. %, or between about 0.2 wt. % and about 8 wt. %, or between about 0.2 wt. % and about 5 wt. %, or between about 0.5 wt. % and about 3 wt. % (based on the total weight of the ceramic feedstock).

In a further embodiment, the ceramic feedstock comprises one or more mineral binders. Suitable mineral binder may be selected from the group including, but not limited to, one or more of bentonite, aluminum phosphate, boehmite, sodium silicates, boron silicates, or mixtures thereof.

In certain embodiments, ceramic feedstock comprise one or more auxiliants (e.g. plasticizers and lubricants) selected from the group consisting of polyethylene glycols (PEGs), glycerol, glycerine, ethylene glycol, octyl phthalates, stearates such as ammonium stearate, wax emulsions, oleic acid, Manhattan fish oil, stearic acid, wax, palmitic acid, linoleic acid, myristic acid, and lauric acid. The auxiliants can be present in a total amount between 0.01 wt. % and 5 wt. % (based on the total weight of the ceramic feedstock), for example, between about 0.01 wt. % and about 2 wt. %, or between about 0.1 wt. % and 2 wt. %, or between about 0.5 wt. % and 2 wt. %.

In certain embodiments, the ceramic feedstock comprises one or more biocides/spoilage control agents: for example, in levels up to about 1% by weight, e.g., oxidizing biocides such as chlorine gas, chlorine dioxide gas, sodium hypochlorite, sodium hypobromite, hydrogen, peroxide, peracetic oxide, ammonium bromide/sodium hypochlorite, or non-oxidising biocides such as GLUT (Glutaraldehyde, CAS No 90045-36-6), ISO (CIT/MIT) (Isothiazolinone, CAS No 55956-84-9 & 96118-96-6), ISO (BIT/MIT) (Isothiazolinone), ISO (BIT) (Isothiazolinone, CAS No 2634-33-5), DBNPA, BNPD (Bronopol), NaOPP, CARBAMATE, THIONE (Dazomet),EDDM - dimethanol (O-formal), HT - Triazine (N-formal), THPS - tetrakis (O-formal), TMAD - diurea (N-formal), metaborate, sodium dodecylbenene sulphonate, thiocyanate, organosulphur, sodium benzoate and other compounds sold commercially for this function, e.g., the range of biocide polymers sold by Nalco.

In certain embodiments, the ceramic feedstock comprises one or more antifoamers and defoamers, for example, in levels up to about 1% by weight, e.g., blends of surfactants, tributyl phosphate, fatty polyoxyethylene esters plus fatty alcohols, fatty acid soaps, silicone emulsions and other silicone containing compositions, waxes and inorganic particulates in mineral oil, blends of emulsified hydrocarbons and other compounds sold commercially to carry out this function.

The ceramic feedstock may be provided in any form which is suitable for further processing, or for packaging and transportation to the customer. In certain embodiments, the ceramic feedstock is in powder form. In certain embodiments, the ceramic feedstock is of a granular form. In certain embodiments, the ceramic feedstock is in pelletized form. In certain embodiments, the ceramic feedstock is in the form of a wire, for example, a coil of feedstock wire.

In certain embodiments, ceramic precursor, which may be a mixture of ceramic precursors is subjected to milling/grinding/sieving to obtain an inorganic particulate having a desired particle size distribution, before combining with gelling agent. For, example, one or more ceramic precursors may be combined and milled in a mill, for example, a ball mill, in dry conditions or in a liquid medium, e.g., water. A dispersant may be included during wet-milling. The milling may be carried out for a suitable period of time sufficient to obtain a particulate having a desired particle size distribution. A person of skill in the art will understand that the duration of milling will depend on a number of processing parameters such as, for example, the type of mill, energy input, amount of raw materials and the desired particle size distribution. In certain embodiments, the total milling time is less than about 25 hours, for example, less than about 20 hours, or less than about 15 hours, or less than about 10 hours, or less than about 5 hours, or less than about 3 hours, or less than about 2 hours, or less than about 1 hour, or less than about 45 minutes. Typically, the total milling time is greater than about 10 minutes. In certain embodiments, the one or more ceramic precursors are milled to obtain a particulate having a d₅₀ of from about 0.1 to µm about 500 µm, for example, from about 0.1 µm to about 250 µm, or from about 0.1 µm to about 100 µm, or from about 0.1 µm to about 50 µm, or from about 0.1 µm to about 25 µm.

In certain embodiments, the dried or at least partially dried ceramic feedstock is obtainable by, or prepared by, a process comprising (i) preparing, obtaining or providing a ceramic slurry comprising one or more ceramic precursors, temperature sensitive gelling agent, solvent and optional dispersant and/or reinforcing additive and/or binder other than the gelling agent, and (ii) treating the ceramic slurry to obtain a dried or at least partially dried ceramic feedstock having a residual solvent content of up to about 15 wt. %, based on the total weight of the ceramic feedstock. This method is also the method according to the fourth aspect of the present invention.

In certain embodiments, the ceramic slurry is prepared by a process comprising (i)(a) mixing the one or more ceramic precursors with solvent and optional dispersant, and heating, (i)(b) separately dissolving gelling agent in solvent, optionally with reinforcing additive and binder other than the gelling agent; and (i)(c) mixing the one or more ceramic precursors with solvent and optional dispersant with the dissolved gelling agent.

Mixing the one or more ceramic precursors with solvent and optional dispersant may be conducted in any suitable mixing apparatus, for example, a Z-arm mixer or an Eirich mixer. In certain embodiments, the ceramic slurry is prepared by milling the one or more ceramic precursors, solvent and optional dispersant, for example, in a ball mill, under conditions suitable to obtain a ceramic slurry. The ceramic slurry may be heated during its preparation or heated following preparation of the ceramic slurry. The ceramic slurry is preferably heated to a temperature which is above the gel point of the gelling agent, for example, a temperature which is at least 10°C, or at least 20°, or at least 30°C above the gel point of the gelling agent. The temperature is typically below the melting point of the gelling agent.

Dissolving the gelling agent in the solvent, typically water, along with other optional additives, such as reinforcing additive, may be conducted in any suitable apparatus. The gelling agent may be added to water and heated to a temperature above the dissolution point of the gelling agent, or the water may already be heated to the requisite temperature and gelling agent dissolved in the heated water.

Following preparation of the mixture comprising one or more ceramic precursors, solvent and optional dispersant, and the dissolved gelling agent, said mixture (at the elevated temperature above the gel point of the gelling agent) and dissolved gelling are mixed, forming the ceramic slurry. In certain embodiments, the temperature during mixing is equal to or less than about 85 °C, for example, equal or less than about 80 °C. Generally, a suitable temperature is selected which is above the gel point of the gelling agent, below the melting point of the gelling agent and, for embodiments in which a dispersant is present, at a temperature which does not adversely affect the functionality of the dispersant. In certain embodiments, the temperature during mixing of the ceramic precursor mixture and dissolved gelling agent is between about 50 °C and 85 °C, for example, between about 65 °C and about 85 °C, or from about 70°C to about 85 °C, or from about 75 °C to about 85 °C, or from about 75 °C to about 80 °C.

In certain embodiments, the mixture comprising one or more ceramic precursors, solvent and optional dispersant, and the dissolved gelling agent, are mixed under conditions to obtain a substantially homogenized ceramic slurry. By `homogenized' is meant that the mixture of raw materials has a uniform composition throughout.

In certain embodiments, the solvent is water. The ceramic slurry will comprise an amount of solvent, e.g., water, which is greater than the residual amount of solvent in the dried or at least partially dried ceramic feedstock. In certain embodiments, the ceramic slurry, following mixing but prior to treatment to obtain the dried or at least partially dried ceramic feedstock, comprises from about 15 wt. % to about 80 wt. % solvent, e.g., water, for example, from about 15 wt. % to about 60 wt. % solvent, or from about 15 wt. % to about 50 wt. % solvent, or from about 20 wt. % to about 50 wt. % solvent, or from about 20 wt. % to about 40 wt. % solvent, or from about 30 wt. % to about 40 wt. % solvent, based on the total weight of the ceramic slurry.

Because the ceramic slurry is treated to obtain the dried or at least partially dried ceramic feedstock, suitable amounts of ceramic precursors, gelling agent and other optional additives may be selected in order to obtain a dried or at least partially dried ceramic feedstock according to the embodiments described herein.

The ceramic slurry is treated to obtain a dried or at least partially dried ceramic feedstock having a residual solvent content of up to about 15 wt. %, based on the total weight of the ceramic feedstock, for example, a ceramic feedstock having a residual solvent content according to the embodiments described herein. The solvent e.g., water, is partially or completely eliminated from the ceramic slurry by the end of the treatment.

In certain embodiments, treating the ceramic slurry to obtain a dried or at least partially dried ceramic feedstock comprises cooling the ceramic slurry to below the gel point of the gelling agent, shredding the resultant cooled ceramic gelled material, drying and milling the shredded cooled ceramic gelled material.

The ceramic gelled material may be shredded in any suitable shredding apparatus. Shredding breaks the gelled material into smaller chunks of material and facilitates handling and subsequent milling. Milling may be conducted in any suitable milling apparatus, such as, for example, a mixer, or mill, for example, a ball mill, such as a planetary ball mill.

In certain embodiments, the total milling time is less than about 10 hours, for example, less than about 5 hours, or less than about 3 hours, or less than about 2 hours, or less than about 1 hour, or less than about 45 minutes. Typically, the total milling time is greater than about 10 minutes.

Drying may be conducted in any suitable drying apparatus, for example, a drying oven. Other dryers include tunnel dryers and periodic dryers. Drying may be effected at a suitable temperature and for a suitable period of time to partially or completely eliminate solvent, e.g., water, from the milled material. In certain embodiments, the temperature is above about 50 °C, for example at or above about 60 °C. In certain embodiments, the temperature is less than about 150 °C, for example, less than about 125 °C, or less than about 110 °C.

In certain embodiments, treating the ceramic slurry to obtain a dried or at least partially dried ceramic feedstock comprises spray drying the ceramic slurry, for example, to prepare a ceramic feedstock in granular form. In certain embodiments, the ceramic slurry is spray dried, forming a granular material, which may then be passed through a sieve having an aperture size of no greater than about 2000 µm to remove over-sized particles, for example, over-sized particles which may be formed by sticking along the walls of the spray-drying apparatus, for example, a spray-drying tower. In certain embodiments, the sieve has an aperture size of no greater than about 1500 µm, for example, no greater than about 1000 µm, or no greater than about 750 µm, or no greater than about 500 µm, or no greater than about 250 µm.

Also provided is a ceramic formulation comprising one or more ceramic precursors, temperature sensitive gelling agent, solvent, and having a viscosity suitable for low pressure injection molding, for example, a viscosity of from about 0.1 to 10.0 Pa.s at a shear rate of 100 s⁻¹, as may be determined using a Haake rheometer, at 65 °C. In certain embodiments, the ceramic formulation is obtainable by mixing the dried or partially dried ceramic feedstock with a suitable amount of solvent to obtain a ceramic formulation having the desired viscosity suitable for low pressure injection molding. Advantageously, the solvent is water. In certain embodiments, the ceramic formulation has a viscosity of from about 0.5 to about 10 Pa.s, for example, from about 0.5 to about 8 Pa.s, or from about 0.5 to about 7 Pa.s, or from about 0.5 to about 6 Pa.s, or from about 0.5 to about 5 Pa.s, or from about 0.5 to about 4 Pa.s, or from about 1.0 to about 8 Pa.s, or from about 2 to about 7 Pa.s, or from about 3 to about 7 Pa.s, or from about 4 to about 6 Pa.s,. It is seen that the ceramic formulation will have a higher, often significantly higher, solvent content compared to the ceramic feedstock from which it is prepared,

In certain embodiments, the ceramic feedstock is used to prepare the ceramic formulation according to the fifth disclosure of the present invention.

Advantageously, the ceramic formulation is suitable for low pressure injection molding at relatively high solids content, for example, at a solids concentration of at least about 40 vol. %, or at least about 50 vol. %. In certain embodiments, the ceramic formulation has a solids concentration of from about 50 vol. % to about 80 vol. %, or from about 50 vol. % to about 70 vol. %, or from about 50 vol. % to about 65 vol. %, or from about 50 vol. % to about 60 vol. %. In certain embodiments, the solids concentration of the ceramic formulation is at least about 51 vol. %, or at least about 52 vol. %, or at least about 53 vol. %, or at least about 54 vol. %, or at least about 55 vol. %, or at least about 56 vol. %, or at least about 57 vo. %, or at least about 58 vol. %, or at least about 59 vol.

Advantageously, the ceramic formulation may be prepared by mixing the ceramic feedstock with a suitable amount of solvent at a temperature above the gel point of the gelling agent. Typically, the solvent, e.g., water, will be heated to the requisite temperature, e.g., from about 60 °C to about 100 °C, or from about 60 °C to about 80 °C, and then combined with the ceramic feedstock. In certain embodiments, the requisite temperature is lower than the melting point of the gelling agent. In certain embodiments, the mixing is conducted in the mixing tank of a low pressure injection molding apparatus.

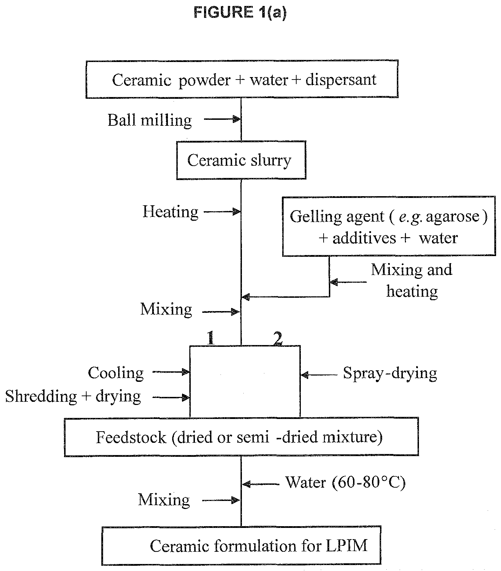

In one illustrative embodiment, a flow chart of ceramic feedstock/ceramic formulation preparation is shown in Figure 1(a). The method comprises preparation of a ceramic slurry comprising one or more ceramic precursors in powder form (i.e., a ceramic powder), water (as solvent) and dispersant (e.g., polyacrylate such as sodium polyacrylate). The ceramic slurry is prepared by mixing these constituents by any suitable means. In certain embodiments, the ceramic slurry is prepared by milling, e.g., ball milling, the mixture of ceramic powder, water and dispersant. Separately, agarose is mixed with water and optional additives, such as a reinforcing additive (e.g., fructose), and heated to a temperature suitable to dissolve the gelling agent. In certain embodiments in which the gelling agent is agarose, the mixture of gelling agent and solvent is heated to greater than about 80 °C, for example, greater than about 85 °C, or greater than about 90 °C. The ceramic slurry is heated, preferably to a temperature above the gel point of the gelling agent, and the solution of gelling agent and optional additives is mixed with the ceramic slurry. The ceramic slurry may be mixed to homogeneity. The resultant ceramic slurry is then treated to obtain a dried or at least partially dried ceramic feedstock. Treatment may comprise (1) cooling the ceramic slurry to below the gel point of the gelling agent, shredding the resultant cooled ceramic gelled material, drying and milling the shredded cooled ceramic gelled material, or (2) spray-drying the ceramic slurry. To prepare the ceramic formulation for low pressure injection molding, the dried or at least partially dried ceramic feedstock is mixed simply with water at a temperature above the gel point of the agarose, e.g., about 60 °C to about 90 °C, or about 60 °C to about 80 °C. The ceramic formulation is then ready for low pressure injection molding.

In certain examples, the ceramic formulation (i.e., a ceramic formulation according to the first disclosure and having a solids concentration of at least 50 vol. %) is prepared by a method according to the second disclosure. Thus, in certain examples, the ceramic formulation is made by a method comprising: providing at least one pre-dispersed ceramic precursor; providing a solution or suspension comprising a solvent and at least one pre-dispersed TS gelling agent, optionally with reinforcing additive and binder other than the gelling agent; and admixing the at least one pre-dispersed ceramic precursor and the solution of suspension to form the ceramic formulation. The various components and amounts thereof of the ceramic formulation described in this section, e.g., ceramic precursor, solvent, TS gelling, dispersant, reinforcing additive, and the like, are as those described above in connection with the ceramic formulation according to the third disclosure and/or the ceramic feedstock and preparations thereof.

In certain embodiments, the at least one pre-dispersed ceramic precursor is in a dry or partially dried form (for example, having a residual solvent content of up to about 15 wt. %, based on the total weight of the pre-dispersed ceramic precursor). In certain embodiments, the solution or suspension is provided by adding a solvent to a dry or partially dry powder comprising the pre-dispersed gelling agent. The solvent may be the same solvent as that used to prepare the pre-dispersed ceramic precursor.

In certain embodiments, the method further comprises heating the solution or suspension to a temperature above the gel point of the gelling agent, for example, to a temperature not greater than about 100 °C, prior to admixing with the at least one pre-dispersed ceramic precursor. In certain embodiments, the temperature is no greater than about 95 °C, or no greater than about 90 °C, or no greater than about 85 °C, or no greater than about 80 °C. Additionally or alternatively, the method may further comprise heating the ceramic formulation to a temperature above the gelling point of the gelling agent, for example, at a temperature no greater than about 100 °C, or no greater than about 95 °C, or no greater than about 90 °C, or no greater than about 85 °C, or no greater than about 80 °C.

In certain embodiments, the pre-dispersed ceramic precursory is heated prior to mixing with solvent and the solution or suspension, for example, to a temperature above the gel point of the gelling agent, or to a temperature within about 20 °C of the gel point, or within about 10 °C of the gel point. In certain embodiments, the pre-dispersed ceramic precursor is not heated prior to admixing with the solution or suspension. In such embodiments, the pre-dispersed ceramic slurry is added sufficiently slowly in order to avoid (i) the temperature of the mixture falling below the gel point of the gelling agent, and/or (ii) gelling of the mixture.

In certain embodiments, the mixing is conducted in the mixing tank of a low pressure injection molding apparatus.

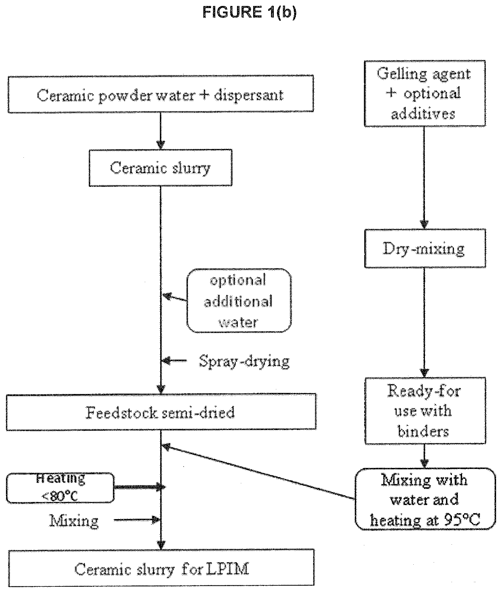

In another illustrative embodiment, a flow chart of ceramic formulation preparation is shown in Figure 1(b). The method comprises preparation of a ceramic slurry comprising one or more ceramic precursors in powder form (i.e., a ceramic powder), water (as solvent) and dispersant (e.g., polyacrylate such as sodium polyacrylate). The ceramic slurry is prepared by mixing these constituents by any suitable means. Optional additives may be mixed with the ceramic slurry. In certain embodiments, the ceramic slurry is prepared by milling, e.g., ball milling, the mixture of ceramic powder, water and dispersant. The ceramic slurry may be mixed to homogeneity. The resultant ceramic slurry is then treated to obtain a dried or at least partially dried ceramic feedstock, for example, by spray drying. Separately, the gelling agent, e.g., agarose, optionally mixed with optional additives such as a reinforcing additive (e.g., fructose) is provided. If optional additives are included then the gelling agent and optional additives may be dry-mixed. To prepare the ceramic formulation for low pressure injection molding, the (optionally dry mixture comprising) gelling agent is mixed with water and optional additional binder and/or dispersant, and heated to a temperature above the gel point of the gelling agent, e.g., about 60 °C to about 90 °C, or about 60 °C to about 80 °C, forming a solution/suspension of pre-dispersed gelling agent. The ceramic feedstock is heated, preferably to a temperature above the gel point of the gelling agent, and mixed with the solution/suspension of pre-dispersed gelling agent. The resultant ceramic formulation is then ready for low pressure injection molding.

In certain embodiments, the ceramic feedstock and pre-dispersed gelling agent are prepared separately in a first location and then transported to a second location where a solution or suspension of the pre-dispersed gelling agent is prepared and then combined with the ceramic feedstock to prepare the ceramic formulation. In certain embodiments, the ceramic feedstock and pre-dispersed gelling agent are prepared separately in different locations and then transported to another location for preparation of a ceramic formulation.

In certain embodiments, a ceramic article is formed by a method comprising: forming a green gelled ceramic body from the ceramic formulation comprising one or more ceramic precursors, temperature sensitive gelling agent, solvent and having a solids concentration of at least 50 vol.%, and firing the green gelled ceramic body to form a sintered ceramic article.

Forming is making the ceramic formulation into a green body of any desirable form or shape, e.g., a plate (e.g., tile), panel or brick, cylinder, sphere, or a complex shape, e.g., a net complex shape.

Firing may be conducted at any suitable temperature according to the type of ceramic material. For example, carbide based ceramics may require firing at temperatures of up to about 2300 °C.

Firing may be conducted at a temperature of from about 900 °C to about 2500 °C.

Firing may be conducted at a temperature of at least 900 °C, for example, at least about 1000 °C, or at least about 1100 °C, or at least about 1200 °C, or at least 1250 °C, or at least about 1300 °C, or at least about 1350 °C, or at least about 1400 °C, or at least about 1450 °C, or at least about 1500 °C, or at least about 1550 °C, or at least about 1600 °C, or at least about 1650 °C, or at least about 1700 °C. The firing temperature may be less than about 2000 °C, for example, less than about 1750 °C, or less than about 1500 °C, or less than about 1450 °C, or less than about 1300 °C.

Firing time may vary depending according to the type of ceramic material. For example, firing time may be any suitable time up to about 96 hours, or up to about 72 hours.

Firing time may be from about 5 hours and 48 hours, for example, from about 10 hours to about 36 hours, for example, from about 10 hours to about 24 hours.

In certain embodiments, firing time is between 15 minutes and 120 minutes, for example, from about 20 minutes to about 90 minutes, for example, from about 20 minutes to about 60 minutes.

The gelled ceramic body may be dried, for example, dried at a temperature of at least about 100 °C, e.g., about 105 °C, and fired at a suitable temperature for a suitable time to form a sintered ceramic article. The drying and firing conditions will vary depending the ceramic processing conditions composition, forming, size of green body and nature of equipments. Firing may be conducted in any suitable oven or kiln.

Advantageously, forming comprises low pressure injection molding the ceramic formulation and cooling the molded formulation to below the gel point of the gelling agent, thereby forming the gelled ceramic body, In certain embodiments, low pressure injection molding is carried out a gauge pressure of less than about 10 bars, optionally wherein the ceramic formulation is at a temperature of no greater than about 80°C during injection molding. Generally, during injection molding the ceramic formulation is maintained at a temperature below the melting point of the gelling agent and above the gel point of the gelling agent. In certain embodiments, the temperature of the ceramic formulation during injection molding is at least about 50 °C, for example, at least about 55 °C, or at least about 60 °C.

In certain embodiments, the low pressure injection molding is carried out a gauge pressure of from about 0.1 bar about 10 bar, for example, from about 0.5 bar to about 8 bar, or from about 1 bar to about 6 bar.

As described herein, ceramic articles that may be obtained from the ceramic formulation are many and various.

These include tableware, including utensils, vessels, and the like, designed for the retention or serving of foods. The article of tableware may be porcelain.

These include sanitary ware, including toilets, basins, and the like, as well as other items of bathroom furniture, such as baths and shower trays and columns. The article of sanitary ware may be porcelain.

Articles of kiln furniture include shelves and posts and the like used to support ware inside the kiln.

Refractory materials include refractory linings such as lining for cupolas hearth and siphon, blast furnaces, main, secondary and tilting runners, vessels or vessel spouts, ladles, tundishes, reaction chambers and troughs that contain, direct the flow or are suitable to facilitate the industrial treatment of liquid metals and slags, or any other high temperature liquids, solids or gases. Refractory materials also include refractory articles, such as those described above, and pre-shaped articles, in whole or part, such as refractory bricks and crucibles.

Technical grade ceramic articles include high heat resistant tiles, such as those used in spacecraft, gas burner nozzles, crucibles, molds and cores for foundry, molten metal filters, structured heat exchangers like honeycombs or random packing, welding rings and supports, ballistic protection, e.g., body armour inserts, biomedical implants, coatings of jet engine turbine and components thereof, such as blades, ceramic disk brakes, missile nose cones, bearings, and the like. Other technical grade ceramics includes parts used for electrical applications, such as plugs, sockets, insulators, resistance supports, spark-plugs, ingitors, fuses, and the like. Other technical grade ceramics include parts used for filtration or catalyst applications, such as molecular sieves, fluid and gas filters, catalyst bed supports, and the like. Other technical grated ceramics include component parts of glass screens, windows, rods, tubs, semi-conductors, optical lenses and fibres.

### EXAMPLES

### Reference Example 1

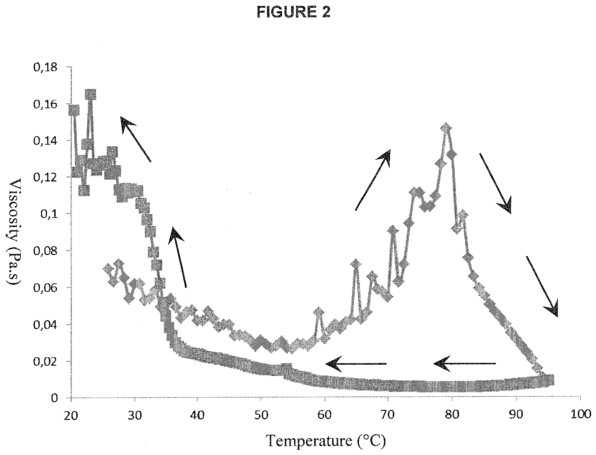

The evolution of the viscosity of an agar solution (water) at 1.0 wt. % was monitored and is depicted in Figure 2. The heating cycle began at about room temperature (about 25°C) and concluded at about 95 °C, followed by the cooling cycle. It is seen that complete dissolution takes place at about 90 °C and the gel point (on cooling) is less than 40°C, indicated by the rapid and marked increase in viscosity between 40 and 30°C.

### Reference Example 2

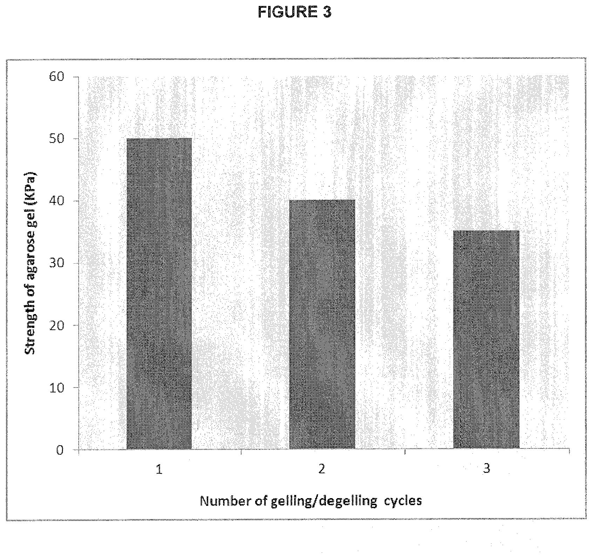

A dissolving-gelling-dissolving cycle was performed on a 1.0 wt. % agarose solution (water). Three cycles in total were conducted. The gel strength of the agarose gel after each cycle was measured and is depicted in Figure 3. It is seen that the gel strength decreases with each cycle. However, all gels exhibit a gel strength significantly higher than 10 kPa, which is the minimum value for gel-casting of ceramics.

### Gel strength:

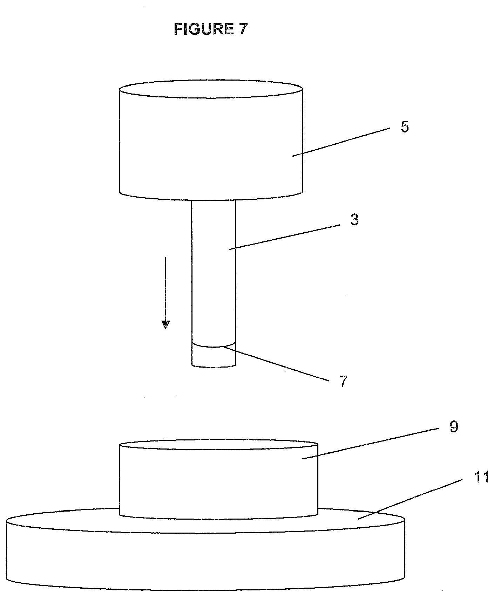

With reference to Figure 7, a compressive load is applied to a gelled body (generally cylindrical having cross section of 1256 mm² and height of 25 mm) at room temperature using a cylindrical indenter (3) (having a cross section of 78.5 mm² and a length of 50 mm), at a rate of 4N/min. The arrow in Figure 7 indicates the direction of movement of the indenter towards the gelled body. A mark (ring) (7) is made at a distance of 2 mm from the bottom of the cylindrical indenter. The cylindrical indenter is supported from above by a suitable housing (5). The housing comprises or is attached to means (not shown) for raising and lowering the cylindrical indenter (3). The gelled body (9) is supported from below by a suitable plate (11). At the beginning of the loading, the gelled body (9) deforms elastically. With load increasing, either the indenter (3) is penetrated into the body of the cylinder of gelled material (9), or the body (9) cracks. The load at which a 2 mm penetration of the cylindrical indenter (3) into the body of the gelled material (9) is observed or at which the body (9) cracked corresponds to the compressive strength of the gel.

### Reference Example 3

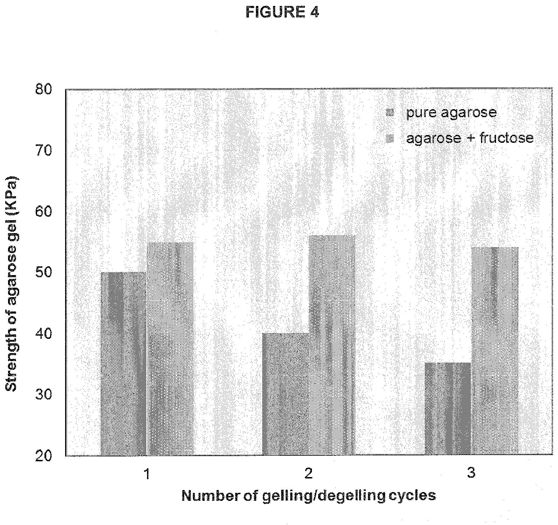

Example 3 was repeated for a gelling solution comprising 1.0 wt. % agarose and 1.0 wt. % fructose. The gel strength of the agarose/fructose gel after each cycle was measured and is depicted in Figure 4. The results from Example 2 are included for comparative purposes. It is seen that the addition of fructose improves/conserves the gel strength over repeated gelling cycles.

### Example 4

Two porcelain ceramic feedstocks were prepared in accordance with the procedure depicted in Figure 1. In each case the porcelain ceramic feedsctock was obtained by the treatment route 1, i.e., cooling, followed by shredding, drying and milling. Each feedstock had a residual water content of about 0.5 wt. %. Details of feedstock compositions are provided in Table 1.

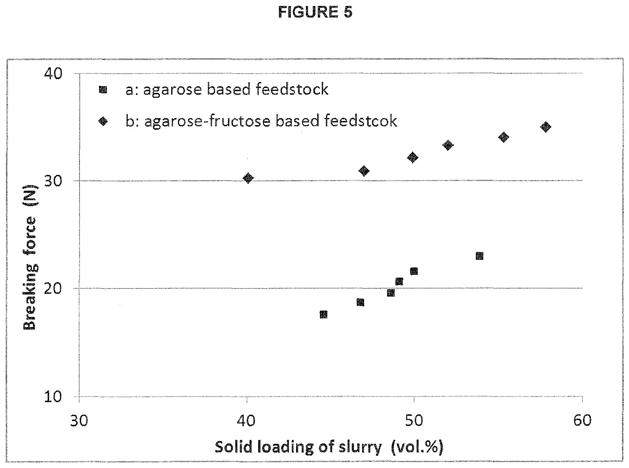

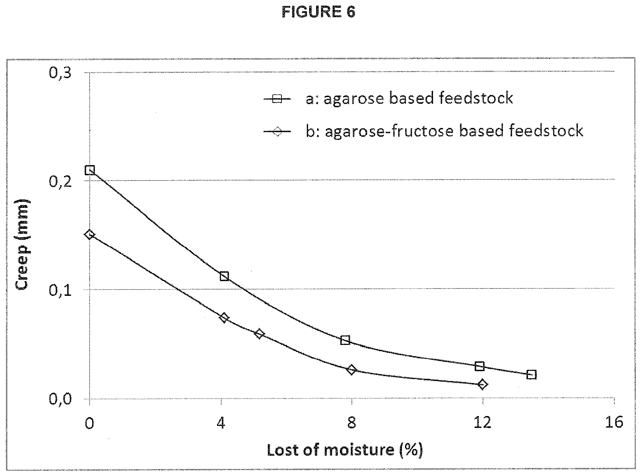

Each feedstock was mixed with warm water (75 °C) in the mixing tank of a low pressure injection molding machine (Peltzamn), forming a ceramic formulation. A range of formulations were prepared having a solids loading varying between 40 vol. % and 60 vol. %. Each ceramic formulation was injected (under a pressure of less than 10 bars) into a non-porous mold. The molded bodies were cooled to below the gel point of agarose and de-molded. The properties of just gelled bodies, especially mechanical strength, indicate their ability to be safely handled before drying and firing. Breaking strength and creeping of the just-gelled bodies were determined. Results are summarised in Figures 5 and 6.

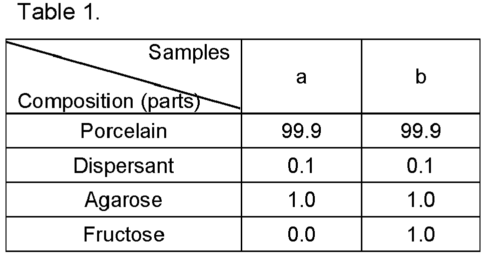

### Breaking strength:

The test procedure and set-up are slightly modified compared to the procedure used to determine the gel strength of the pure gels of Reference Examples 2 and 3.

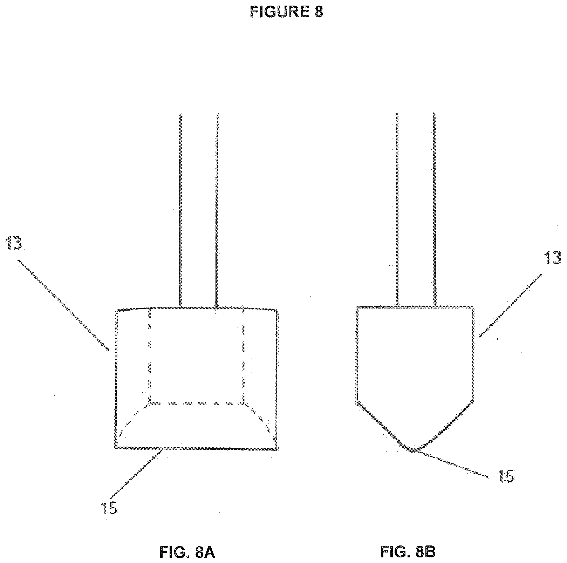

The gelled samples (generally cylindrical body) had a diameter of 27 mm and a height of 30 mm. Instead of the cylindrical indenter (3), as depicted in Figure 7, the indenter (13) has a smooth dull edge (15), as depicted schematically in Figures 8A and 8B. Figure 8B is a view of the indenter rotated 90° relative to the view in Figure 8A. During compression the indenter (13) is lowered into the top of the gelled body at a rate of 1 mm/min. The maximum force measured during the loading is taken as the breaking strength of the sample.

### Creeping:

Creeping measurement was performed on gelled pieces of slurries having a solid loading of 52 vol. %. It evaluates the tendency of the just gelled piece to slowly deform/collapse under its own weight after demolding. The specimen was cylindrical with a diameter of 27 mm and a height of 30 mm. During the test, the specimen is placed between two parallel plates (common compression test set-up). The apparatus is similar to that depicted in Figure 7, save that the indenter is replaced by a top plate which is parallel to bottom plate (11). A constant uniaxial load of 2 N is applied for a period of 5 min. The creeping corresponds to the height deformation of the specimen.

### Example 5

A porcelain ceramic feedstock was prepared in accordance with the procedure depicted in Figure 1b. The porcelain ceramic feedstock was obtained by. ball milling, followed by spray-drying. The feedstock had a residual water content of about 5 wt. %. Details of feedstock composition are provided in Table 2.

**Table 2.**

| **Component** | **Composition (parts** |
|---|---|
| porcelain | 99.9 |
| dispersant | 0.1 |

Separately, agarose was mixed with warm water (100°C) in the mixing tank of a low pressure injection molding machine (Cerinnov). Once the agarose is well-dissolved, tank temperature was decreased to 80°C, and additional dispersant and porcelain ceramic feedstock were added and mixed in the mixing tank, forming a ceramic formulation. A series of formulations were prepared with a solid content of about 53 vol. % and had a viscosity of about 5.6 Pa.s at a shear rate of 100 s⁻¹. Each ceramic formulation was injected (under a pressure of less than 10 bar, injection time varied from 5 to 60 seconds for a 118 cm³ piece) into a cooled non-porous mold. The molded pieces were cooled (30 seconds) to below the gel point of agarose and de-molded. The just gelled pieces could be safely handled before drying, biscuit firing, glazing and firing.

## Claims

1. A ceramic feedstock comprising one or more ceramic precursors and temperature sensitive gelling agent, wherein the ceramic feedstock is dried or at least partially dried and has a solvent content from 0.1 to 7.5 wt.%, based on the total weight of the ceramic feedstock, wherein the temperature sensitive gelling agent is selected from one or more of a polysaccharide, gelatin, a polyoside, a poloxamer and mixtures thereof.

2. A ceramic feedstock according to claim 2 in powder, granulated or pelletized form.

3. A method of preparing a dried or at least partially dried ceramic feedstock having a residual solvent content from 0.1 to 7.5 wt.%, said method comprising:
preparing or providing a ceramic slurry comprising one or more ceramic precursors, temperature sensitive gelling agent, solvent and optional dispersant and/or reinforcing additive and/or binder other than the gelling agent, wherein the temperature sensitive gelling agent is selected from one or more of a polysaccharide, gelatin, a polyoside, a poloxamer and mixtures thereof; wherein the solvent is a polar solvent; and
treating the ceramic slurry under suitable conditions to obtain a dried or at least partially dried ceramic feedstock having a residual solvent content from 0.1 to 7.5 wt.%, based on the total weight of the ceramic feedstock.

4. A ceramic feedstock or method according any preceding claim, wherein the temperature sensitive gelling agent is a polysaccharide or a mixture of polysaccharides, optionally wherein the polysaccharide is selected from one or more of agar, agarose, and arabic gum.

5. A ceramic feedstock or method according to any preceding claim, wherein the temperature sensitive additive has a gel point of less than 60 °C.

6. A ceramic feedstock or method according to any preceding claim, further comprising dispersant and/or reinforcing additive and/or binder other than the gelling agent.

7. A ceramic feedstock or method according claim 6, wherein the dispersant is selected from the group consisting of sulfonated naphthalene formaldehyde condensate (SNFC), polyelectrolytes such as polycarboxylic acids, polyacrylates and copolymers containing polyacrylate species, especially polyacrylate salts (e.g., sodium and aluminium optionally with a group II metal salt), polyphosphonates, sodium hexametaphosphates, non-ionic polyol, polyphosphoric acid, condensed sodium phosphate, non-ionic surfactants, and alkanolamines and/or wherein the reinforcing additive is a monosaccharide or a polysaccharide other than the temperature sensitive gelling agent.

## Patentansprüche

1. Keramikausgangsstoff, der einen oder mehrere Keramikvorläufer und ein temperaturempfindliches Geliermittel umfasst, wobei der Keramikausgangsstoff getrocknet oder mindestens teilweise getrocknet ist und einen Lösungsmittelgehalt von 0,1 bis 7,5 Gew.-% bezogen auf das Gesamtgewicht des Keramikausgangsstoffs aufweist, wobei das temperaturempfindliche Geliermittel aus einem oder mehreren von einem Polysaccharid, Gelatine, einem Polyosid, einem Poloxamer und Mischungen davon ausgewählt ist.

2. Keramikausgangsstoff nach Anspruch 2 in Pulver-, Granulat- oder Pelletform.

3. Verfahren zum Herstellen eines getrockneten oder mindestens teilweise getrockneten Keramikausgangsstoffs mit einem Restlösungsmittelgehalt von 0,1 bis 7,5 Gew.-%, wobei das Verfahren Folgendes umfasst:
Vorbereiten oder Bereitstellen einer Keramikaufschlämmung, umfassend einen oder mehrere Keramikvorläufer, temperaturempfindliches Geliermittel, Lösungsmittel und optionales Dispergiermittel und/oder verstärkendes Additiv und/oder Bindemittel außer dem Geliermittel, wobei das temperaturempfindliche Geliermittel aus einem oder mehreren von einem Polysaccharid, Gelatine, einem Polyosid, einem Poloxamer und Mischungen davon ausgewählt ist; wobei das Lösungsmittel ein polares Lösungsmittel ist; und
Behandeln der Keramikaufschlämmung unter geeigneten Bedingungen, um einen getrockneten oder mindestens teilweise getrockneten Keramikausgangsstoff mit einem Restlösungsmittelgehalt von 0,1 bis 7,5 Gew.-% bezogen auf das Gesamtgewicht des Keramikausgangsstoffs zu erhalten.

4. Keramikausgangsstoff oder Verfahren nach einem der vorstehenden Ansprüche, wobei das temperaturempfindliche Geliermittel ein Polysaccharid oder eine Mischung von Polysacchariden ist, wobei das Polysaccharid optional aus einem oder mehreren von Agar, Agarose und Gummi arabicum ausgewählt ist.

5. Keramikausgangsstoff oder Verfahren nach einem der vorstehenden Ansprüche, wobei das temperaturempfindliche Additiv einen Gelpunkt von weniger als 60 °C aufweist.

6. Keramikausgangsstoff oder Verfahren nach einem der vorstehenden Ansprüche, außer dem Geliermittel ferner umfassend ein Dispergiermittel und/oder ein Verstärkungsadditiv und/oder ein anderes Bindemittel.

7. Keramikausgangsstoff oder Verfahren nach Anspruch 6, wobei das Dispergiermittel aus der Gruppe ausgewählt ist, die aus sulfoniertem Naphthalin-Formaldehyd-Kondensat (SNFC), Polyelektrolyten wie Polycarbonsäuren, Polyacrylaten und Copolymeren mit Polyacrylatspezies, insbesondere Polyacrylatsalzen (z. B. Natrium und Aluminium, optional mit einem Metallsalz der Gruppe II), Polyphosphonaten, Natriumhexametaphosphaten, nichtionischem Polyol, Polyphosphorsäure, kondensiertem Natriumphosphat, nichtionischen Tensiden und Alkanolaminen besteht, und/oder wobei das Verstärkungsadditiv ein Monosaccharid oder ein anderes Polysaccharid als das temperaturempfindliches Geliermittel ist.

## Revendications

1. Matière première céramique comprenant un ou plusieurs précurseurs de céramique et un agent gélifiant sensible à la température, dans laquelle la matière première céramique est séchée ou au moins partiellement séchée et a une teneur en solvant de 0,1 à 7,5 % en poids, sur la base du poids total de la matière première céramique, dans laquelle l'agent gélifiant sensible à la température est choisi parmi un ou plusieurs parmi un polysaccharide, la gélatine, un polyoside, un poloxamère et des mélanges de ceux-ci.

2. Matière première céramique selon la revendication 2, sous forme de poudre, de granulés ou de pastilles.

3. Procédé de préparation d'une matière première céramique séchée ou au moins partiellement séchée ayant une teneur en solvant résiduel de 0,1 à 7,5 % en poids, ledit procédé comprenant :
la préparation ou la fourniture d'une suspension de céramique comprenant un ou plusieurs précurseurs de céramique, un agent gélifiant sensible à la température, un solvant et éventuellement un dispersant et/ou un additif de renforcement et/ou un liant autre que l'agent gélifiant, dans lequel l'agent gélifiant sensible à la température est choisi parmi un ou plusieurs parmi un polysaccharide, la gélatine, un polyoside, un poloxamère et des mélanges de ceux-ci ; dans lequel le solvant est un solvant polaire ; et
le traitement de la suspension de céramique dans des conditions appropriées pour obtenir une matière première céramique séchée ou au moins partiellement séchée ayant une teneur en solvant résiduel de 0,1 à 7,5 % en poids, sur la base du poids total de la matière première céramique.

4. Matière première céramique ou procédé selon une quelconque revendication précédente, dans lesquels l'agent gélifiant sensible à la température est un polysaccharide ou un mélange de polysaccharides, éventuellement dans lesquels le polysaccharide est choisi parmi un ou plusieurs parmi l'agar, l'agarose et la gomme arabique.

5. Matière première céramique ou procédé selon une quelconque revendication précédente, dans lesquels l'additif sensible à la température a un point de gel inférieur à 60 °C.

6. Matière première céramique ou procédé selon une quelconque revendication précédente, comprenant en outre un dispersant et/ou un additif de renforcement et/ou un liant autre que l'agent gélifiant.

7. Matière première céramique ou procédé selon la revendication 6, dans lesquels le dispersant est choisi dans le groupe constitué de condensat de naphtalène formaldéhyde sulfoné (SNFC), de polyélectrolytes tels que les acides polycarboxyliques, les polyacrylates et les copolymères contenant des espèces polyacrylates, en particulier les sels de polyacrylate (par exemple, les sels de sodium et d'aluminium éventuellement avec un métal du groupe II), les polyphosphonates, les hexamétaphosphates de sodium, le polyol non ionique, l'acide polyphosphorique, le phosphate de sodium condensé, des tensioactifs non ioniques et des alcanolamines et/ou dans lesquels l'additif de renforcement est un monosaccharide ou un polysaccharide autre que l'agent gélifiant sensible à la température.
